Europäisches Patentamt

European Patent Office

Office européen des brevets

(11) Publication number: **0 173 272**
**B1**

(12) **EUROPEAN PATENT SPECIFICATION**

(45) Date of publication of patent specification: 25.07.90

(21) Application number: 85110668.2

(22) Date of filing: 24.08.85

(51) Int. Cl.⁵: **H 04 M 3/50**

(54) Method of obtaining directory assistance in a telephone system and apparatus.

(30) Priority: **27.08.84 US 644811**

(43) Date of publication of application:
**05.03.86 Bulletin 86/10**

(45) Publication of the grant of the patent:
**25.07.90 Bulletin 90/30**

(84) Designated Contracting States:
**DE FR GB IT NL**

(56) References cited:
DE-A-2 429 099
DE-B-1 291 796
US-A-3 928 724

NACHRICHTENTECHNISCHE ZEITSCHRIFT, vol.
30, no. 10, 1977, pages 768-773, Berlin, DE; J.F.
SCHMIES et al.: "Realisierung eines
rechnergesteuerten Auskunftssystems für den
privaten Benutzer"

(73) Proprietor: **Cognitronics Corporation**
**25 Crescent Street**
**Stamford, CT 06906 (US)**

(72) Inventor: **Shepard, David H.**
**30 Island Drive**
**Rye New York 10580 (US)**

(74) Representative: **Dr. Fuchs, Dr. Luderschmidt**
**Dipl.-Phys. Seids, Dr. Mehler Patentanwälte**
**Abraham-Lincoln-Strasse 7**
**D-6200 Wiesbaden (DE)**

(56) References cited:
INFORMATIONEN FERNSPRECH-
VERMITTLUNGSTECHNIK, vol. 8, no. 3,
November 1972, pages 119-122, Munich, DE; G.
ARNDT et al.: "Automatische
Rufnummernauskunft mit dem Fernsprecher als
Datenstation - das Versuchssystem AURA für
Nebenstellenanlagen"

Courier Press, Leamington Spa, England.

## EP 0 173 272 B1

**Description**

The principal telephone system in the United States provides for directory assistance through the use of special dialing codes which bring an operator on the line. For example, to obtain long distance information, one would enter the area code (e.g. 617), followed by 555-1212. The operator typically responds by asking "which city". Upon satisfactory response to that query, the operator asks for the name of the party whose telephone number is sought. In certain areas today, the operator then activates some type of equipment which presents to the operator a display which lists the name or names most closely fitting the information given to the operator by the caller. Upon identifying the desired party's number, the operator will either continue by speaking the telephone number, or by activating a voice-response device which generates spoken words electronically identifying the telephone number.

Various kinds of equipment have been proposed for assisting in carrying out the directory assistance function such as described above. For example, US-A-4,341,929 discloses a date retrieval system for use in telephone directory searching and which employs a data entry unit having individual keys for all of the alphabetic and numeric characters. However, such prior art directory assistance systems suffer from the disadvantage of requiring human (operator) action in responding to a request for assistance.

DE-B 1 291 796 shows a generalize computer system for processing requests for information developed at a telephone, with answer-back signals delivered via voice sounds in some instances.

DE-A-24 29 099 shows another computer controlled information request system for obtaining information including the telephone number of a subscriber, giving the answers by voice sounds from an announcing unit.

A telephone system of the type having a plurality of local exchanges distributed about a very large geographical region remotely from one another, each local exchange being connected to a corresponding set of telephones by voice channels. Each telephone includes keying means for sending decimal signals through the associated voice-grade channel to the corresponding local exchange, said keying means comprising a set of keying means each designating a group of alphabetic letters and an associated numeral so that the signals produced by each of said set represent the corresponding alphabetic group and the associated numerals. The system further comprises plurality of information retrieval processors distributed about said geographical region remotely from one another, each of said information retrieval processors including information storage means storing alphanumeric data identifying information of potential interest to a person at any one of said telephone connected to any one of said local exchanges.

The special feature of this disclosure is to provide the stored data not only at the main memory of the computer servicing a particular zone, but also as back-up data at the main memories of other computers serving neighboring zones, that recourse can be had to the back-up data in the event of failure at the principal data storage location.

In a preferred embodiment of the invention to be described in detail hereinafter, there is provided a fully-automatic telephone directory assistance system. In this system, the party seeking assistance enters all of the request data through the standard telephone keys, commonly comprising an array of push-buttons. (Dial equipment may also be used, but that version will not be described for the sake of simplicity; however, it should be noted that the terms "key" and "key in" are used herein to encompass both push-button and dial signalling devices.)

More specifically, the alphabetic request information (city, subscriber's name) is entered using the alphabetic designators already on the push-buttons. Local request processing apparatus (e.g. at the local exchange) receives and stores the signals identifying the request, and directs corresponding digital signals to a directory look-up station where the appropriate subscriber data base is scanned for comparison with the subscriber identifying data from the originating telephone. When a match is found, the corresponding subscriber identification and telephone number is sent by alphanumeric code signals back to the request processing station. There, a voice-response device is activated by such code signals to send through the telephone voice channel of the requesting party speech signals identifying (1) the name of the subscriber, for verification, and (2) the telephone number of the subscriber.

It may particularly be noted that the signals entered through the telephone keys by the requesting party are decimal signals. That is, the telephone numeric keys produce only ten different signals, with eight of such signals identifying groups of alphabetic letters (ABC, DEF, etc.). Thus, the directory assistance request signals have an inherent ambiguity. For example, if the number "2" button is pressed to produce a signal identifying one letter of a subscriber's name, the signal could represent "A", "B" or "C" of the group of letters ABC associated with the number 2 push button.

However, it has been found that in looking up subscriber names, this ambiguity can (generally) be resolved even in large directories from the additional information available from the redundancy in names. That is, for the most part, such redundancy results in a decimal code uniquely identifying the subscriber whose number is sought. There must be provision anyway for handling parties with identical names, an ambiguity of much greater frequency, and simple procedures can be carried out in the system of the present invention to resolve remaining ambiguities of either type.

In accordance with another aspect of the present invention, significant improvement in efficiency is achieved because the system employs digital transmission in all of the required data transfers except for the relatively short segment between the calling subscriber and the local exchange or nearby center. In

2

prior art systems, in comparison, quite lengthy voice-grade transmission channels typically are used to connect the inquiring party to an operator at the subscriber data base. For example, an inquiring party in Stamford, Conn., might be connected by a voice channel to an operator at the regional data base in San Francisco, Calif., in order to find the telephone number of a subscriber in San Francisco. In accordance with aspects of the present invention, however, the inquiring party need communicate through a voice channel only as far as the local exchange, and all other data transfers from that point on can be carried out using digital codes, resulting typically in efficiency improvement of a factor in excess of 100 to one for the long distance leg of the communication.

In accordance with still further features of the invention, efficiency also is enhanced by the concentration factor achieved through multiplexing. For example, with multiplexing, a single voice-response device at a local request processor can simultaneously service a relatively large number of voice lines leading to subscribers' telephones. Similarly, the digital traffic to and from the local request processor can, with multiplexing, be handled by a single digital link to the digital network.

Accordingly, an object of this invention is to provide a more economical system for obtaining information from a distant source when this information is to be voiced to the caller. A more specific object of this invention is to provide a simple fully-automatic system for obtaining information from any telephone without need for operator intervention. Other objects, aspects and advantages of the invention will in part be pointed out in, and in part apparent from, the following description of a preferred embodiment of the invention, considered together with the accompanying drawings.

FIGURE 1 is a block diagram illustrating the principles of the present invention; and

FIGURE 2 is a diagram showing one form of data transmission system suitable for use in the arrangement of Figure 1.

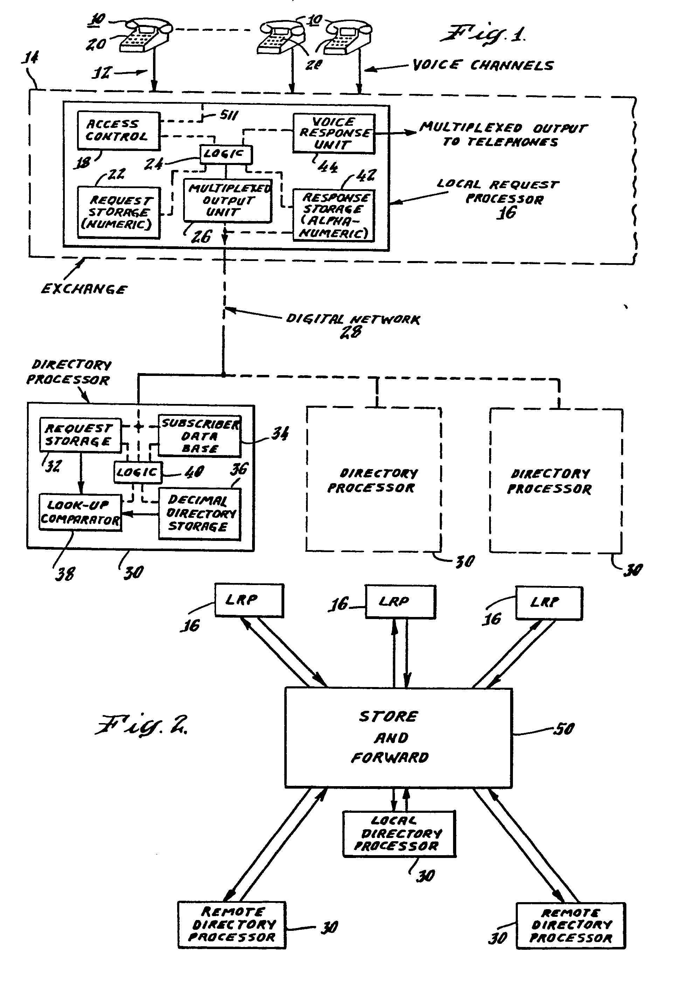

Referring now to Figure 1, there is shown a group of standard telephones 10 each connected by a corresponding voice channel 12 to a local telephone exchange generally indicated at 14. This exchange includes the usual switching equipment, responsive to coded signals from the telephones 10, for effecting interconnection between subscribers.

Located at the exchange 14 is a set of equipment, referred to herein as a Local Request Processor 16, for handling requests for directory assistance. Access to this equipment might for example be effected by keying-in a simple local number such as 511. The equipment would include means responsive to the input of such local number, illustrated in Figure 1 as Access Control 18, for making connection to the calling telephone. In typical exchanges the apparatus used to process an incoming call to establish connection between the telephone and a Local Request Processor is in fact relatively complex; since it does not form part of the present invention, description of such apparatus will be omitted for the sake of brevity.

After connection has been established between the calling telephone 10 and the Local Request Processor 16, the customer enters data spelling out the particular request for directory assistance. The data is entered in decimal (numeric) code, preferably using the standard set of "Touch-Tone" or "Touch-Call" (trademarks of AT & T and GTE respectively) push-buttons generally indicated at 20, and referred to herein generically as "touch-type" push-buttons. Alphabetic information, such as city or subscriber name, is entered by using the alphabetic designators carried by the push-buttons 20. The entered data is stored in a Request Storage Unit 22.

It should be noted that each alphabetic-indicating decimal signal stored is the only information available to represent the corresponding alphabetic character. That is, the information represented by a given decimal signal is not qualified or conditioned by other signal input information, as it is in known touch-type data entry systems where actuation of two (or more) telephone pushbuttons is used to indicate a particular alphabetic character.

In a typical sequence, the customer first would enter the area code of the region where the phone of the subscriber being sought is located. This would be followed by the city name (or a one or two letter abbreviation therefor). Next, a zero would be entered to indicate the end of the city name. Then, the customer would enter the last name of the person or company desired, followed by a zero as a separator, and followed by the first name or initial (or second word of company name). Finally, two zeros might be keyed in to indicate end of entry. (The use of the pound sign or star in touch-type telephone equipment may be preferable but the use of zero (and/or one) makes the description of the system equally applicable to systems where signals are keyed-in with dial-pulse data entry equipment.)

The Local Request Processor 16 includes Logic 24 for handling a variety of chores. One function is to check the entered decimal code data for format. If that test is passed, the sequential decimal signals in Request Storage 22 are developed as an outgoing message by an Output Unit 26 under control of Logic 24. The message preferably is formatted in an "envelope" indicating start, end, voice channel number and telephone exchange of origin. Such message might for example be in ASCII code.

The developed message signal is directed from the Output Unit 26 to a digital network 28 for transmittal on to one of a number of Directory Processors 30 (the selection being determined by the area code), where it is placed in a Request Storage Unit 32. The Directory Processor would likely be located at the 555-1212 center for the given area code, but it could be located at further centralized or decentralized locations, depending upon system considerations.

The Directory Processor 30 includes a Subscriber Data Base 34 which contains all of the directory information typically stored in a regional 555-1212 center. This data is alphanumeric, i.e. the stored signals define each of the data characters explicitly, without ambiguity. The request signals in Request Storage 32, on the other hand, are decimal. As noted above, each of such decimal signals may specify any one of a corresponding group of alphabetic characters, resulting in a degree of ambiguity for individual characters. However, because of the redundancy of information in names, it is possible (for the most part) to use decimal signals to uniquely identify a corresponding subscriber name in a directory data base.

Various procedures can be employed for carrying out a "look-up" of the subscriber name corresponding to a decimal request signal. One procedure presently preferred is to sort the names in the alphanumeric data base 34 decimally, to produce a corresponding Decimal Directory Storage 36. Such Decimal Directory Storage would present all of the name data as though it had been produced by entering the alphanumeric characters through a set of standard telephone numeric keys, using their grouped alphabetic designators for developing the numeric data (decimal signal) for each of the alphabetic characters. For example, for a subscriber name "JONES", the decimal data base would contain the numeric signals for 5-6-6-3-7.

The actual look-up procedure then is carried out simply by comparing the decimal signals in Request Storage 32 with the signals in the Decimal Directory Storage 36, as by means of a Look-up Comparator 38. When a match is found, Logic 40, forming part of the Directory Processor 30, reads out selected corresponding alphanumeric subscriber information (i.e. name and telephone number) from the Subscriber Data Base 34. This subscriber information then is sent, still in alphanumeric code, back through the digital network 28 to the Request Processor 16. Other subscriber information such as city and street address may or may not be included depending on policy.

The alphanumeric information sent back to the Request Processor is stored in a Response Storage Unit 42 of known design. The Logic 24 in the Request Processor supervises the storage of these signals, and operates to control a Voice Response Unit 44 in accordance with the signals, so as to send through the voice channel of the telephone being serviced corresponding signals producing a group of speech sounds (identifying alphabetic letters, words and/or phrases) conveying the requested directory information.

The overall request/response procedure might, for example, be carried out as follows:

**Entered data:**

| 511 | (Pause) | 914 | RYE | 0 | SHEPARD | 0 | DAVID | 00 |
|---|---|---|---|---|---|---|---|---|
| Access Number | Wait for Connection | Area Code | City Name | Separ-ator | Name | Separ-ator | Name | End |

**Voice response:**

"The listing for S-H-E-P-A-R-D  D-A-V-I-D is 967-2952. Repeating, 967 2952".

While in the above illustration the city name is keyed in as in current normal directory assistance procedure, it is usually unnecessary within an area code and probably best left out unless needed later in the communication to resolve an ambiguity.

The standard touch-type push-button array makes no provision for the letters "Q" and "Z". However, in the system of the present invention, it is necessary that all letters of the alphabet be available for data entry. A simple solution to this problem is to assign "Q" and "Z" to respective logically associated push-buttons the subscriber could easily remember, e.g. the buttons for numbers 7 and 9 respectively, as shown in the following table:

| Numeral | Letter Group |
|---|---|
| 1 | - |
| 2 | ABC |
| 3 | DEF |
| 4 | GHI |
| 5 | JKL |
| 6 | MNO |
| 7 | PQRS |
| 8 | TUV |
| 9 | WXYZ |
| 0 | - |

The conventional push-button arrays also include two additional buttons labelled "*" (star) and "#" (pound sign), which produce corresponding distinctive tone signals from the telephone. These non-numeric designators can be used in the present system to provide special controlling functions for the directory assistance equipment. For example, the star key can be used in place of the zero as a separator between words, and the pound key can be used to indicate end of entry.

The look-up procedure described above will at times develop multiple listings for a single inquiry. To resolve this ambiguity, the Directory Logic 40 may in accordance with a further aspect of the invention be arranged to forward the alphabetic codes for all of the multiple name listings (up to some reasonable limit) to the Local Request Processor 16. At that station, the Voice-response Unit 44 would be controlled by the code signals and Logic 24 to ask the subscriber for further information such as a street name or middle initial. If the subscriber can supply such information, the voice-response unit will complete the inquiry by reading out the telephone number of the so-identified correct subscriber, in the usual fashion. If not, each of the possible listings can be given to the subscriber. In either event, no communication to the remote data base is required since all the possible listings have already been transmitted to the local processor.

In the special, relatively less frequent case above where the ambiguity resulted from using numeric codes, the Logic 24 would recogize that spellings of different names were involved and cause the Voice-Response Unit 44 to spell out each of the names, asking the subscriber to key "Y" or "N" for "yes" or "no" to identify the correct name. Still other procedures may be used in accordance with these principles to handle the other various situations which are encountered.

The Digital Network 28 is shown as a single line in Figure 1, but in a commercial system the network would very likely be quite complex. It should be understood that the present invention is not based on any particular type of digital network, and that any of a number of different types of networks could be selected, depending upon optimizing system considerations. Simply as an example, Figure 2 is included to illustrate one type of digital network which might be suitable.

The Figure 2 network 28 is of the so-called "star" type, having as its central feature a Store and Forward unit 50 of conventional design. Connected to this unit are a number of LRPs (Local Request Processors), such as that shown at 16 in Figure 1. Each of these LRPs might be located at a central telephone exchange (e.g. the types of exchanges identified in the telephone industry as Class 4 or Class 5 exchanges). Although only one Store and Forward unit is shown in Figure 2, there would in such a system be a number of such units, with appropriate interconnections therebetween. Such units probably would be at centralized locations, much fewer in number than the telephone exchanges.

Also connected to the Store and Forward unit 50 are a number of Directory Processors (DPs), such as that indicated at 30 in Figure 1. One is shown as a Local Directory Processor (i.e. near the Store and Forward unit), and the others are remote from the Store and Forward unit. These Directory Processors would include apparatus such as illustrated at 30 in Figure 1. The illustrated system is based on the assumption that the remote Directory Processors would have sufficient traffic to justify a dedicated digital channel to each Directory Processor.

Typical LRPs would be capable of handling a number of simultaneous voice channels 12, such as 16 or 64 channels each. The LRP would poll in turn each of the digital circuits (not shown) conventionally associated with each voice channel 12, seeking requests to send, thus supervising an orderly flow of decimal request signals. As noted hereinabove, the request information would be developed in conventional message format comprising an "envelope" indicating start, end, and voice-channel number of origin. At the Store and Forward unit 50, the identity of the originating LRP would be added to the message. This message would be stored and (essentially simultaneously) re-transmitted on to the designated Directory processor 30 (as determined by the area code). Such re-transmittal of the message preferably would employ an arrangement wherein sub-storage units are polled to determine which has a completed message ready to be sent on, in order to assure orderly traffic on the links to the Directory Processors.

After the receiving Directory Processor has received a request message, and has made the required look-up, it transmits its reply message back to the requesting Store and Forward unit. This unit in turn, relays the message on to the originating LRP, and within that LRP through the Logic 24 and the Voice-Response Unit 44 to the requesting telephone line. US-A-3,534,171 shows a multiplexing arrangement permitting a single voice-response unit to service a number of separate channels effectively simultaneously.

There are many possible variants of digital networks which can be selected to satisfy particular requirements. For example, in less populated areas, it may be more economical to "chain" LRP units, with each LRP monitoring only a small number of voice channels. LRPs in the middle of the chain could contain a small "Store and Forward" which would merge the LRP's own requests with digital requests coming from further down the chain. In the opposite direction (that of the "answer" messages) each LRP would simply monitor the channel for information pertaining to itself. Thus, in some cases, chains of LRPs might substitute for legs going to individual LRPs in the Figure 2 arrangement. Similarly, where sufficient traffic does not exist from a center to a remote DP station to merit a separate digital channel, a nearby DP station could act in a store and forward capacity.

# EP 0 173 272 B1

**Claims**

1. In a telephone system of the type having a plurality of local exchanges (14) distributed about a very large geographical region remotely from one another, each local exchange (14) being connected to a corresponding set of telephones (10) by voice grade channels (12), each telephone (10) including keying means for sending decimal signals through the associated voice grade channel (12) to the corresponding local exchange (14), said keying means comprising a set of keying means (20) each designating a group of alphabetic letters and an associated numeral so that the signals produced by each of said set of keying means can be used to represent the corresponding alphabetic group and the associated numeral, said system further comprising

at least one information retrieval processor, in said geographical region said information retrieval processor including information storage means storing alphanumeric identifying information of potential interest to a person at any one of said telephones connected to any one of said local exchanges, characterized by

(1) a request proceeding apparatus (16) at each of said local exchanges (14) to receive from any of the corresponding set of telephones (10) an information request signal in the form of a plurality of decimal signals corresponding respectively to the characters of at least one multi-character data word identifying particular information at said information retrieval processor which is desired, said request processing apparatus including:

(A) means (22) to store the received decimal request signals from any of the corresponding set of telephones (10):

(B) means (24,26) to develop transmittable digital signals representing the stored decimal information request signals;

(C) means (42) to store alphanumeric reply signals representing the particular information desired as identified by said information request signals; and

(D) a signal-controllable voice-response unit (44) for sending to any of the set of telephones (10) connected over said voice grade channels (12) signals representing selected speech sounds corresponding to alphanumeric reply signals in said means to store reply signals;

(2) a digital data transmission network (28) connecting all of said local exchanges (14) to said information retrieval processor so that said transmittable digital signals representing information request signals can be transmitted from said local exchanges (14) through said network (28) to said information retrieval processor, with the retrieved information from the associated information storage means being transmitted back from said information retrieval processor through said digital network (28) to said request processing apparatus (16) at the local exchange (14) which originated the request for information;

(3) each of said information retrieval processors further comprising:

(A) look-up means (38) for comparing signals responding to said transmittable signals received from said digital data network (28) with signals developed from said information storage means associated with the corresponding information retrieval processor;

(B) means to develop and send back through said digital data network (28) to said request processing apparatus (16) originating the information request signals alphanumeric reply signals representing the particular information from said associated storage means designated by said information request signals;

(4) said voice-response unit (44) of said request processing apparatus (16) including means operable to produce and direct through the voice-grade channel (12) of the telephone (10) which originated the information request signals speech signals responsive to said stored alphanumeric reply signals sent back from the selected information retrieval processor in digital alphanumeric format over said digital data transmission network (28) and representing the particular information requested from that telephone (10).

2. Apparatus as claimed in Claim 1, wherein said digital network (28) is of the "star" type comprising a store and forward unit (50).

3. Apparatus as claimed in Claim 2, comprising:

a plurality of local request processors (16) coupled to said store and forward unit (50); and a plurality of remote information retrieval processors coupled to said store and forward unit.

4. Apparatus as claimed in Claim 1, wherein the information retrieval processors store telephone directory information; the reply sent back from such retrieval processors including the name of the party whose telephone number was sought.

5. The method of obtaining information stored alphanumerically in geographical region by operating a telephone in a telephone system of the kind including a plurality of local exchanges (14) located remotely from each other in said geographical region with each exchange being connectible by respective voice-grade channels (12) to any of a corresponding set of telephones (10) including a plurality of keying means for producing respective decimal signals, said keying means comprising a set of keying means (20) each designating a group of aphabetic letters and an associated numeral so that the signals produced by each of said set of keying means can be used to represent the corresponding alphabetic group and the associated numeral;

operating said keying means (20) at any one of said telephones (10) of any of said sets of telephones to produce a request signal in the form of a plurality of decimal signals corresponding respectively to the characters of a multi-character data word identifying the information which is desired;

6

EP 0 173 272 B1

directing said decimal signals through the respective voice-grade channel (12) from said one telephone (10) to the corresponding local exchange (14);

storing said entered decimal signals at a request processor (16) at said corresponding local exchange (14) with each character of the data word represented by a corresponding decimal signal;

operating a voice-response unit at said corresponding local exchange (14) in accordance with said stored alphanumeric reply signals to develop speech signals identifying said particular information;

directing said developed speech signals through said respective voice-grade channel (12) back to said one telephone (10) to furnish the requested information to the person operating said one telephone (10), characterized by the steps of

directing signals corresponding to said request signals in digital signal format through a digital network (28) to an information retrieval processor at a region geographically remote from said local exchange (14) and including storage means storing alphanumeric data identifying information of potential interest

carrying out a look-up of said stored information at said information retrieval processor to locate the particular information desired as identified by the decimal signals entered through said one telephone;

directing back through said digital network (28) to said corresponding local exchange (14) digital alphanumeric signals representing said particular information; and

storing at said request processor (16) at said corresponding local exchange alphanumeric reply signals corresponding to said alphanumeric signals sent back through said digital network (28).

6. The method of Claim 5, wherein the request signal is developed at said request processor (16) in message format comprising an envelope indicating "start", "end", and voice-grade channel (12) of origin.

7. The method of Claim 6, wherein the digital request signals being transmitted through the digital network (28) are directed to a store and forward unit which adds to the signal envelope the identity of the request processor (16) which originated the digital request signals and sends the resulting signal on to the selected remote region.

8. The method of Claim 5, wherein the information sought is the telephone number of a party in the selected geographically remote region.

**Revendications**

1. Système téléphonique du type avec une pluralité de centraux téléphoniques locaux (14) éparpillés sur une région géographique très vaste et éloignés l'un de l'autre, dont chaque central téléphonique local (14) est joint à une série de téléphones correspondante (10) par des voies de conversation (12), dont chaque téléphone contient des dispositifs de codage pour transmettre des signaux décimaux à travers les voies téléphoniques associées (12) au central local correspondant (14), lesdits dispositifs de codage ayant une série de dispositifs de codage (20), dont chacun désigne un groupe de lettres alphabétiques et un chiffre associé, de manière que l'on peut utiliser les signaux produits par chacun desdites dispositifs de codage pour représenter le groupe alphabétique correspondant et le chiffre associé, ledit système contenant de plus

un processeur de recherche des informations, au minimum, dans cette région géographique, ledit processeur de recherche des informations comprenant des dispositifs à stockage des informations, mettant en mémoire l'information alphanumérique identifiante qui est d'intérêt potentiel pour une personne à chacun desdites téléphones particuliers mis en communication avec chacun desdites centraux téléphoniques, caractérisé par

(1) un appareil à procéder la demande (16) à chacun desdites centraux téléphoniques locaux (14) pour recevoir par chacune des séries de téléphones correspondantes (10) un signal de la demande des informations en forme d'une pluralité de signaux décimaux, qui correspondent conformément aux caractères d'une donnée élémentaire à plusieurs caractères identifiant une information particulière audit processeur de recherches des informations qui est désirée, ledit appareil à procéder la demande comprenant:

(A) des dispositifs (22) pour mettre en mémoire les signaux décimaux de demande recus de chacune des séries de téléphones correspondants (10);

(B) des dispositifs (24, 26) à dévolopper des signaux digitaux transmissibles représentant les signaux décimaux de demande des informations mis en mémoire;

(C) des dispositifs (42) pour mettre en mémoire des signaux de réponse alphanumériques représentant l'information particulière désirée comme identifiés par les signaux de demande des informations; et

(D) une unité à réponse vocale étant contrôlable par des signaux (44) pour transmettre à chacune des séries de téléphones (10), qui sont mis en communication au moyen desdites voies téléphoniques, des signaux (12) représentant des sons de conversation sélectionnés, correspondant à des signaux de réponse alphanumériques dans lesdits dispositifs pour la mise en mémoire des signaux de réponse;

(2) un réseau à transmission des données (28) mettant en communication tous lesdits centraux téléphoniques locaux (14) avec ledit processeur de recherche des informations, de manière que l'on peut transmettre lesdits signaux digitaux transmissibles, représentant des signaux de demande des informations desdits centraux téléphoniques (14), à travers ledit réseau de transmission (28) audit processeur de recherche des informations avec l'information récupérée du dispositif de stockage des

7

informations associé, qui est transmis de retour dudit processeur de recherche des informations à travers ledit réseau de transmission digital (28) audit appareil à procéder la demande (16) au central téléphonique local (14), dont la demande des informations tira son origine;

(3) chacun desdits processeurs de recherche des informations contenant de plus:

(A) des dispositifs à consulter (38) pour comparer des signaux qui répondent auxdits signaux transmissibles recus par ledit réseau informatique digital (28) avec des signaux qui sont développés par lesdits dispositifs de stockage des informations associés au processeur de recherche des informations correspondant;

(B) des dispositifs pour développer et transmettre de retour des signaux de réponse alphanumériques à travers ledit réseau digital de transformation de données (28) jusqu'audit appareil à procéder la demande (16) qui engendre les signaux de demande des informations, lesdits signaux de réponse alphanumériques représentant l'information particulière par lesdits dispositifs de stockage associés et spécifiés au moyen desdits signaux de demande des informations;

(4) ladite unité à réponse vocale (44) dudit appareil à procéder la demande (16), comprenant des dispositifs capable de produire et conduire à travers les voies de conversation (12) du téléphone (10), qui engendra les signaux de demande des informations, des signaux vocaux en réponse auxdits signaux de réponse alphanumériques mis en mémoire et transmis de retour du processeur de recherche des informations, sélectionné de format digital alphanumérique via ledit réseau de transmission de données digital (28) et représentant l'information particulière demandée de ce téléphone (10).

2. Appareil comme revendiqué selon la revendication 1, en quoi ledit réseau d'information digital (28) est du type "star" comprenant une unité de stockage et de transmission.

3. Appareil comme revendiqué selon la revendication 2, comprenant une pluralité de processeurs de demande locaux (16) connectée à ladite unité de stockage et de transmission (50); et une pluralité de processeurs de recherche des informations éloignés qui sont connectés auxdites unités de stockage et de transmission.

4. Appareil comme revendiqué selon la revendication 1, en quoi les processeurs de recherche des informations mettent en mémoire une information d'annuaire téléphonique; la réponse transmis de retour de tels processeurs de retrieval contient le nom de l'abonné dont le numéro de téléphone était cherché.

5. La méthode d'obtenir l'information qui est mémorisée alphanumériquement en une région géographique par opérer un téléphone dans un système téléphonique du type qu'il comporte une pluralité de centraux téléphoniques locaux (14) situés distamment l'un de l'autre en ladite région géographique, dont chaque central téléphonique peut être mis en communication par des voies de conversation respectives (12) avec l'une quelquonque des séries de téléphones correspondantes (10), comportant une pluralité de dispositifs de codage pour produire des signaux décimaux respectifs, ledit dispositif de codage comprenant une série de dispositifs de codage (20), dont chacun désigne un groupe de lettres alphabétiques et un numéral associé, de manière, que l'on peut utiliser les signaux produits par chacune de ladite série de dispositifs de codage pour représenter le groupe alphabétique correspondant et le numéral associé;

opérant lesdits dispositifs de codage (20) à l'une quelquonque desdites séries de téléphones (10) pour produire un signal de demande en forme d'une pluralité de signaux décimaux, correspondant respectivement aux caractères d'une donnée élémentaire à plusieurs caractères identifiant l'information qui est désirée;

dirigeant lesdits signaux décimaux à travers les voies de conversation respectives (12) dudite seul télphone (10) au central téléphonique local correspondant (14);

mettant en mémoire lesdits signaux décimaux introduits manuellement à un processeur de demande (16) audit central téléphonique local correspondant (14), en occasion de quoi chaque caractère de la donnée élémentaire est représenté par un signal décimal correspondant;

opérant une unité à réponse vocale audit central téléphonique local correspondant (14), conformément aux signaux de réponse alphanumériques mémorisés pour développer des signaux vocaux identifiant ladite information particulière;

directionnant de retour lesdits signaux vocaux développés à travers ladite voie de conversation respective (12) audit seul téléphone (10) pour la transmission de l'information demandée à la personne opérant ledit seul téléphone (10), caractérisée par les mesures de

diriger des signaux correspondants vers lesdits signaux de demande en format d'un signal digital à travers un réseau digital (28) vers un processeur de recherche des informations dans une région géographiquement éloignée dudit central téléphonique local (14) et contenant des dispositifs de stockage mémorisant des données alphanumériques identifiant l'information d'intérêt potentiel

effectuer une consultation de ladite information mémorisée audit processeur de recherche des informations pour localiser l'information particulière désirée comme elle est identifiée par les signaux décimaux introduits via ledit seul téléphone;

diriger de retour des signaux digitaux alphanumériques qui représentent ladite information particulière à travers ledit réseau digital (28) vers ledit central téléphonique correspondant; et

mettre en mémoire dans ledit processeur de demande (16) audit central téléphonique local correspondant des signaux de réponse alphanumériques qui correspondent auxdits signaux alphanumériques transmis de retour à travers ledit réseau digital (28).

EP 0 173 272 B1

6. La méthode selon la revendication 5, en quoi le signal de demande est développé audit processeur de demande (16) en format de message contenant une enveloppe indiquant "start", "end" et la voie de conversation (12) d'origine.

7. La méthode selon la revendication 6, en quoi les signaux digitaux de demande transmis à travers le réseau digital (28) sont dirigés vers une unité de stockage et de transmission ajoutant à l'enveloppe du signal l'identité du processeur de demande (16) qui origina les signaux digitaux de demande et transmet le signal résultant à la région éloignée qui fut sélectionnée.

8. La méthode selon la revendication 5, en quoi l'information demandée est le numéro de téléphone d'un abonné dans la région géographiquement éloignée qui fut sélectionnée.

**Patentansprüche**

1. Telefonsystem mit einer Vielzahl örtlicher Vermittlungsstellen (14), die über ein sehr großes geographisches Gebiet voneinander entfernt verteilt sind, wobei jede örtliche Vermittlungsstelle (14) über Fernsprechkanäle (12) mit einem entsprechenden Satz von Telefonen (10) verbunden ist, von denen jedes ein Wählmittel zum Senden von Dezimalsignalen an die entsprechende örtliche Vermittlungsstelle (14) über die betreffende Fernsprechleitung aufweist, wobei das Wählmittel einen Satz von Wählmitteln (20) aufweist, von denen jedes eine Gruppe von alphabetischen Buchstaben und eine dieser zugeordneten Ziffer bezeichnet, so daß die von jedem der Wählmittel erzeugten Signale dazu verwendet werden können, die entsprechende alphabetische Gruppe und die zugeordnete Ziffer zu repräsentieren, und mit wenigstens einem Retrievalprozessor, wobei dieser in dem genannten geographischen Bereich einen Informationsspeicher beinhaltet, der alphanumerische Identifikationsinformation von potentiellem Interesse für eine Person an jedem der genannten, mit irgendeiner örtlichen Vermittlungsstellen verbundenen Telefon speichert, gekennzeichnet durch

(1) ein Anforderungsverarbeitungsgerät (16) an jeder der örtlichen Vermittlungsstellen zum Empfang eines Informationsanforderungssignal von einem des betreffenden Satzes von Telefonen, wobei dieses Signal in Form einer Anzahl von Dezimalsignalen vorliegt, die den Zeichen wenigstens eines Mehrzeichen-Datenwortes, das eine bestimmte gewünschte Information an dem Retrievalprozessor identifiziert, wobei das Anforderungsverarbeitungsgerät umfaßt:

(A) Mittel zum Speichern des empfangenen dezimalen Anforderungssignals von irgendeinem des betreffenden Satzes von Telefonen (10);

(B) Mittel (24, 26) zum Erzeugen übermittlungsfähiger Digitalsignale, die die gespeicherten dezimalen Informationsanforderungssignale repräsentieren;

(C) Mittel (42) zum Speichern alphanumerischer Antwortsignale, die die bestimmte gewünschte Information wie identifiziert durch die Informationsanforderungssignale repräsentieren, und

(D) eine signalsteuerbare Sprachausgabeeinheit (44) zum Senden von Signalen an irgendeines der Telefone (10), die über die genannten Fernsprechkanäle verbunden sind, wobei diese Signale ausgewählte Sprachsignale darstellen, welche alphanumerischen Antwortsignalen in dem Mittel zum Speichern der Antwortsignale entsprechen;

(2) ein digitales Datenübertragungsnetzwerk (28), welches alle örtlichen Vermittlungsstellen (14) mit dem Retrievalprozessor verbindet, so daß die erwähnten übertragbaren Signale, welche die Informationsanforderungssignale repräsentieren, von den örtlichen Vermittlungsstellen (14) durch das Netzwerk (28) an den Retrievalprozessor übermittelt werden können, wobei die gesuchte Information von dem zugeordneten Informationsspeicher von dem Retrievalprozessor über das digitale Netzwerk (28) zurück an das Anforderungsverarbeitungsgerät (16) an der örtlichen Vermittlungsstelle, von der die Informationsanforderung stammt, gesandt wird;

(3) wobei jeder der Retrievalprozessoren aufweist:

(A) ein Nachschlagemittel (38) zum Vergleichen von Signalen, die mit den genannten übertragbaren, von dem digitalen Netzwerk (28) empfangenen Signalen korrespondieren, mit Signalen, die von dem Informationsspeicher, welcher dem betreffenden Retrievalprozessor zugeordnet ist, erzeugt werden,

(B) Mittel zum Erzeugen und Zurückschicken von alphanumerischen Antwortsignalen zu dem Anforderungsverarbeitungsgerät (16), von dem die Informationsanforderungssignale herrühren, über das digitale Datennetzwerk (28), wobei diese Antwortsignale die bestimmte Information aus dem zugehörigen Speicher repräsentieren, welcher von den Informationsanforderungssignalen bestimmt ist;

(4) wobei die Sprachausgabeeinheit (44) des Anforderungsverarbeitungsgerätes (16) Mittel beinhaltet, die Sprachsignale erzeugen und weiterleiten können über den Fernsprechkanal (12) des Telefons (10), von dem die Informationsanforderungssignale stammen, wobei die Sprachsignale die Antwort auf die gespeicherten alphanumerischen Antwortsignale sind, die vom Retrievalprozessor in digitalem alphanumerischen Format über das digitale Datenübertragungsnetzwerk (28) zurückgesandt werden und die bestimmte, von dem Telefon (10) angeforderte Information repräsentieren.

2. Gerät nach Anspruch 1, bei dem das digitale Netzwerk (28) sternförmig mit einem Speicher und einer Weiterleitungseinheit (50) aufgebaut ist,

3. Gerät nach Anspruch 2 mit einer Anzahl von örtlichen Anforderungsprozessoren (16), die mit dem Speicher und der Weiterleitungseinheit (50) verbunden sind, und mit einer Anzahl von Fernretrievalprozessoren, die mit dem Speicher und der Weiterleitungseinheit verbunden sind.

9

4. Gerät nach Anspruch 1, bei dem die Retrievalprozessoren Informationen von Fernsprechbüchern speichern, wobei die von den Retrievalprozessoren zurückgesandte Antwort den Namen desjenigen Teilnehmers enthält, dessen Fernsprechnummer gesucht wurde.

5. Verfahren zum Abrufen von Information, die alphanumerisch in einem geographischen Bereich gespeichert ist, durch Bedienung eines Telefons in einem Telefonsystem der Art, welches eine Anzahl von örtlichen Vermittlungsstellen (14) aufweist, die entfernt voneinander in dem genannten geographischen Bereich verteilt sind, wobei jede Vermittlungsstelle mit jedem des entsprechenden Satzes von Telefonen (10) über die entsprechenden Fernsprechkanäle (12) verbindbar ist, wobei die Telefone eine Anzahl von Wählmitteln zur Erzeugung entsprechender Dezimalsignale aufweisen und wobei die Wählmittel eine Anzahl von Wählmitteln (20) aufweisen, von denen jedes eine Gruppe von alphabetischen Buchstaben und eine zugehörige Ziffer bezeichnet, so daß die von jedem der Wählmittel erzeugten Signale verwendet werden können, um die korrespondierende alphabetische Gruppe und die zugehörige Ziffer zu repräsentieren;

durch Bedienung der Wählmittel (20) an irgendeinem der Telefone (20) irgendeines Satzes von Telefonen, um ein Anforderungssignal in Form einer Anzahl von Dezimalsignalen zu erzeugen, die entsprechend mit den Zeichen eines Mehrdatenwortes, welches die erwünschte Information identifiziert, korrespondieren;

durch Leiten der Dezimalsignale über den betreffenden Fernsprechkanal (12) von dem einen Telefon (10) zu der entsprechenden örtlichen Vermittlungsstelle (14);

durch Speichern des eingegebenen Dezimalsignals an einen Anforderungsprozessor (16) an der betreffenden örtlichen Vermittlungsstelle (14), wobei jedes Zeichen des Datenwortes durch ein entsprechendes Dezimalsignal repräsentiert wird;

durch Ansteuerung einer Sprachausgabeeinheit an der betreffenden lokalen Vermittlungsstelle in Entsprechung mit den gespeicherten alphanumerischen Antwortsignalen, um ein die erwünschte Information entsprechendes Sprachsignal zu erzeugen;

durch Weiterleitung des genannten Sprachsignals zurück zu dem einen Telefon (10) über die entsprechende Fernsprechleitung (12), um die angeforderte Information der Bedienungsperson des einen Telefons (10) zuzuleiten, gekennzeichnet durch die folgenden Verfahrensschritte:

Weiterleiten der den Anforderungssignalen entsprechenden Signale im digitalen Signalformat über ein digitales Netzwerk (28) zu einem Retrievalprozessor in einem geographisch von der genannten lokalen Vermittlungsstelle (14) entfernt liegenden Bereich und Bereitstellen eines Speichermittels, das die die interessierende Information identifizierenden alphanumerischen Daten speichert;

Ausführen eines Nachschlagens der gespeicherten Information an dem Retrievalprozessor, um die erwünschte, durch die dezimalen Signale, die bei dem einen Telefon eingegeben wurden, identifizierte Information aufzufinden;

Zurückleiten der digitalen alphanumerischen Signale, welche die erwünschte Information repräsentieren, zu der betreffenden örtlichen Vermittlungsstelle (14) über das digitale Netzwerk (28), und

Speichern der alphanumerischen Antwortsignale, welche den über das digitale Netzwerk (28) zurückgesandten alphanumerischen Signalen entsprechen, an dem Anforderungsprozessor (16) an der betreffenden lokalen Vermittlungsstelle.

6. Verfahren nach Anspruch 5, bei dem das Anforderungssignal an dem Anforderungsprozessor (16) in einem Nachrichtenformat, umfassend eine Gruppe, die "Start", "Ende" und den Herkunfts-Fernsprechkanal (12) indiziert, erzeugt wird.

7. Verfahren nach Anspruch 6, bei dem die digitalen Anforderungssignale, die über das digitale Netzwerk (28) übermittelt werden, zu einem Speicher und einer Weiterleitungseinheit geleitet werden, welche zu der Signalgruppe die Identität des Anforderungsprozessors (16) hinzufügt, von dem die digitalen Anforderungssignale herkommen und der das resultierende Signal zu der ausgewählten entfernt liegenden Region sendet.

8. Verfahren nach Anspruch 5, bei dem die gesuchte Information die Telefonnummer eines Teilnehmers in einer ausgewählten geographisch entfernt liegenden Region ist.

*Fig.1.*

VOICE CHANNELS

ACCESS CONTROL
18

511

VOICE RESPONSE UNIT
44

MULTIPLEXED OUTPUT TO TELEPHONES

LOGIC
24

REQUEST STORAGE (NUMERIC)
22

MULTIPLEXED OUTPUT UNIT
26

RESPONSE STORAGE (ALPHA-NUMERIC)
42

LOCAL REQUEST PROCESSOR
16

EXCHANGE

DIGITAL NETWORK
28

DIRECTORY PROCESSOR

REQUEST STORAGE
32

SUBSCRIBER DATA BASE
34

LOGIC
40

DECIMAL DIRECTORY STORAGE
36

LOOK-UP COMPARATOR
38

DIRECTORY PROCESSOR
30

DIRECTORY PROCESSOR
30

30

*Fig.2.*

LRP
16

LRP
16

LRP
16

STORE AND FORWARD
50

LOCAL DIRECTORY PROCESSOR
30

REMOTE DIRECTORY PROCESSOR
30

REMOTE DIRECTORY PROCESSOR
30